# EUROPÄISCHE PATENTSCHRIFT

(11) **EP 1 450 006 B1**
(45) Veröffentlichungstag und Bekanntmachung des Hinweises auf die Patenterteilung: **05.04.2006**
(21) Anmeldenummer: 04090042.5
(22) Anmeldetag: 11.02.2004
(51) Int. Cl.: F01D 5/28, F01D 5/14, F01D 5/34, B23P 15/04

(54) **Verdichterschaufel für ein Flugzeugtriebwerk**
Compressor blade for aircraft engines
Aube de compresseur pour un moteur d'avion

(30) Priorität: 22.02.2003 DE 10307610
(43) Veröffentlichungstag der Anmeldung: 25.08.2004
(73) Patentinhaber: Rolls-Royce Deutschland Ltd & Co KG, 15827 Dahlewitz (DE)
(72) Erfinder: Schreiber, Karl, 15806 Mellensee (DE)
(74) Vertreter: Wablat, Wolfgang

(56) Entgegenhaltungen:
- GB-A- 950 434
- GB-A- 1 276 458
- US-A- 3 637 325
- US-A- 3 695 778
- US-A- 4 006 999
- US-A- 4 738 594
- US-A- 5 483 034
- US-B1- 6 431 837

## Beschreibung

Die Erfindung betrifft eine Verdichterschaufel für ein Flugzeugtriebwerk, deren Schaufelblatt einen Schaufelkern aus einem Faserverbundwerkstoff und eine mehrteilige metallische Umhüllung umfasst.

Die Schaufeln von Strömungsmaschinen und insbesondere von Flugzeugtriebwerken sind durch Fliehkräfte, Gasdruck und von dem strömenden Medium angeregte Schwingungen des Schaufelblattes, aber auch durch Erosion aufgrund angesaugter Fremdpartikel oder durch Korrosion erheblichen Belastungen ausgesetzt. Die Verdichterschaufeln von Flugzeugtriebwerken können zusätzlich und in erheblichem Umfang durch den beim Auftreffen eines Vogels auf die Fanschaufeln bewirkten Vogelschlag belastet werden. Den dementsprechenden höchsten Sicherheitsanforderungen steht andererseits der Wunsch gegenüber, die Herstellungskosten zu verringern und den spezifischen Brennstoffverbrauch durch Reduzierung des Gewichts der Schaufeln und damit auch der Berstschutzelemente des Triebwerks zu senken.
Diese Bauweise für rotierende Schaufeln kann in gleicher Weise auch für Statorschaufeln genutzt werden.

Zur Gewichtsreduzierung sind in Hohlbauweise ausgebildete Schaufeln bekannt, deren Fertigung jedoch mit extrem hohen Kosten verbunden ist und deren Verwendung daher nur bei großen Triebwerken wirtschaftlich vertretbar ist. Da der Einsatz von in Hohlbauweise ausgebildeten Triebwerksschaufeln für Triebwerke mit geringem Schub hinsichtlich des Verhältnisses zwischen der erzielbaren Gewichtseinsparung und den dafür erforderlichen Kosten nicht effektiv ist, werden die entsprechend kleineren Schaufeln solcher Triebwerke bisher weiterhin aus massivem Titan gefertigt. Sie halten zwar den oben erwähnten Belastungen stand, sind aber dennoch gegenüber den durch die Strömung bedingten Schwingungen anfällig und zudem schwer und teuer.

Des Weiteren wurden aus Faserverbundwerkstoffen bestehende Schaufeln entwickelt, die gegenüber einer herkömmlichen, aus einem geeigneten Metall massiv hergestellten Schaufel zwar deutliche Gewichtsvorteile aufweisen und auch über eine spezifische Festigkeit und eine hohe Eigendämpfung zur Vermeidung von Schwingungen verfügen, aber den strengen Festigkeitskriterien in Bezug auf Erosion oder einen an der Oberfläche oder Eintrittskante des Schaufelblattes wirkenden Vogelschlag nicht genügen.

Aus der US-A-4,006,999 ist eine Verdichterschaufel mit einem aus einem Faserverbundwerkstoff bestehenden Schaufelkern und einem an der Vorderkante angebrachten, am Faserverbundwerkstoff gehaltenen metallischen Führungskanten-Formstück bekannt. Das im Querschnitt asymmetrische, das heißt auf der Druckseite länger als auf der Saugseite ausgebildete Führungskantenformstück, weist eine Auskehlung auf, in die der Faserverbundwerkstoff hineinragt.

Eine in der GB-A-1 276 485 beschriebene Hohlschaufel, die auch mit einem Füllmaterial gefüllt sein kann, umfasst eine zweiteilige Umhüllung, bestehend aus einem Führungskanten-Formstück mit einstückig angeformtem Deckblech und einem druckseitig unmmittelbar an dem Führungskanten-Formstück angeschweißten Deckblech.

Die US 5655883 beschreibt eine aus einem Kohlenstofffaserverbund in einer Epoxidharzmatrix und einer Titanabdeckung bestehende Verdichterschaufel, deren Titanteil die Saugseite sowie den Vorderkanten- und Hinterkanten- und Schaufelspitzenbereich abdeckt.

Aus der DE 196 27 860 C1 ist eine Schaufel für eine Strömungsmaschine bekannt, die einen Schichtkörper aus faserverstärktem Kunststoff umfasst, dessen Oberfläche teil- oder vollflächig mit einer Schicht aus metallischen Fasern oder Fäden abgedeckt ist, die mit dem angrenzenden faserverstärkten Kunststoff über das gleiche Kunstharzbindemittel verbunden ist.

Gemäß der EP 1106783 A2 wird schließlich eine Strömungsmaschinenschaufel vorgeschlagen, deren aus einem Verbundwerkstoff bestehende Tragstruktur des Schaufelkerns von einer metallischen Hüllstruktur, bestehend aus einem Blech aus Titan oder dgl. und einem an der Innenseite des Bleches aufgeschweißten oder -gelöteten Metallfilzgewebe, umgeben ist.

Zwar weisen die zuvor erwähnten Triebwerksschaufeln gegenüber den bekannten Massivmetallschaufeln bei deutlich verringertem Gewicht eine ausreichende Eigenfestigkeit, Korrosionsbeständigkeit und schwingungsdämpfende Wirkung auf, hinsichtlich der Erosionsbeständigkeit und insbesondere in Bezug auf die Schlagfestigkeit beim Auftreffen von Vögeln oder anderen Objekten auf die Schaufeln werden sie den hohen Sicherheitsanforderungen jedoch nicht gerecht. Die Deckschicht kann durch länger wirkende Erosion oder bei einem Vogelschlag beschädigt werden, in deren Folge auch der aus dem Faserverbundmaterial bestehende Schaufelkern zerstört werden kann. Zudem ist es mit den bekannten Trag- und Hüllstrukturen nicht möglich, gerade im Eintrittsbereich der Luft eine aerodynamisch vorteilhafte geometrische Gestalt der Schaufel zu erzeugen.

Der Erfindung liegt die Aufgabe zugrunde, eine gattungsgemäße Verdichterschaufel für Strömungsmaschinen und für Flugzeugtriebwerke über einen großen Schubkraftbereich anzugeben, die leicht und aerodynamisch vorteilhaft ausgebildet ist und neben den betriebsbedingten Belastungen auch den durch Vogelschlag oder erodierendes Material bedingten Belastungen standhält.

Erfindungsgemäß wird die Aufgabe mit einer gemäß den Merkmalen des Patentanspruchs 1 ausgebildeten Verdichterschaufel gelöst. Aus den Unteransprüchen ergeben sich weitere Merkmale und vorteilhafte Weiterbildungen der Erfindung.

Gemäß der Erfindung ist die metallische Umhüllung des aus Faserverbundmaterial bestehenden Schaufelkerns mehrteilig ausgebildet und aus einem Deckblech für die Saugseite, einem Deckblech für die Druckseite und einem aerodynamisch geformten, aus massivem Metall bestehenden Führungskanten-Formstück aufgebaut. Durch das mit den beiden Deckblechen verbundene Formstück können die auf die Schaufel durch Vogelschlag oder erodierendes Material wirkenden größten Belastungen aufgenommen werden und die aerodynamischen Eigenschaften optimal eingestellt werden. Der Aufbau aus den drei Umhüllungsbestandteilen ermöglicht eine von der jeweiligen Beanspruchung abhängige Variation der eingesetzten Werkstoffe und Materialstärken, um einerseits die geforderten Festigkeitseigenschaften zu gewährleisten, aber andererseits möglichst wenig Material einzusetzen und dadurch auch bei der Umhüllung Gewicht zu sparen. Die mehrteilige Ausbildung der Umhüllung unter Verwendung des Führungskanten-Formstücks erlaubt zudem eine einfache Reparatur der Verdichterschaufel. Das Führungskanten-Formstück ist zudem asymmetrisch ausgebildet, so dass die Deckbleche und deren Anschlüsse an das Führungskanten-Formstück versetzt zueinander angeordnet sind. Dadurch ist die stärker belastete Fügenaht und auch das stärker belastete Deckblech auf der Druckseite der Verdichterschaufel weiter von der Führungskante entfernt und wird weniger stark beansprucht. Die Asymmetrie des Führungskanten-Formstücks bezieht sich auf eine an dessen zum Schaufelkern weisender Innenfläche vorgesehene Auskehlung sowie auf eine unterschiedliche Materialstärke auf der Druckseite und auf der Saugseite, wobei auf der Druckseite mehr Material als auf der Saugseite vorhanden ist. In der gleichen Art kann auch die Stärke der Deckbleche variiert werden, wobei auch Bleche mit sich ändernder Blechstärke eingesetzt werden können, jedoch der dickere Blechabschnitt an das Führungskanten-Formstück anschließt.

In vorteilhafter Weiterbildung der Erfindung kann an der zum Schaufelkern weisenden Seite des Führungskanten-Formstücks ein Befestigungssteg angeformt sein, über den eine innige Verbindung des Führungskanten-Formstücks mit dem Faserverbundwerkstoff des Schaufelkerns erzielt wird. Die innige Verbindung zwischen Vorderkanten und Faserwerkstoff kann zum Beispiel auch durch formschlüssiges Einweben der Vorderkanten erfolgen

Ausführungsbeispiele der Erfindung werden anhand der Zeichnung näher erläutert. Es zeigen:
- Fig. 1: eine Schnittansicht des Schaufelblattes einer erfindungsgemäß ausgebildeten Verdichterschaufel für ein Flugzeugtriebwerk;
- Fig. 2: eine detaillierte Darstellung des Bereichs der Führungskante der Verdichterschaufel nach Fig. 1 in einer ersten Ausführungsform;
- Fig. 3: eine detaillierte Darstellung der Führungskante der Verdichterschaufel nach Fig. 1 in einer zweiten Ausführungsvariante; und
- Fig. 4: eine detaillierte Darstellung der Verdichterschaufel im Bereich der Führungskante in einer dritten Ausführungsform.

Die Verdichterschaufel umfasst einen hochsteifen Schaufelkern 1 aus einem Faserverbundmaterial, eine metallische Umhüllung 2 mit einem Führungskanten-Formstück 3 und einem Schaufelfuß (nicht dargestellt), über den die Verdichterschaufel mit einer Scheibe(nicht dargestellt) verbunden ist.

Das Faserverbundmaterial des Schaufelkerns dient in bekannter Weise als Tragstruktur zur Aufnahme der Zentrifugalkräfte und der Biege- und Torsionsbelastung sowie zur Schwingungsdämpfung und schließlich zur Gewichtsreduzierung gegenüber den massiv aus Metall hergestellten Verdichterschaufeln. Die metallische Umhüllung 2 besteht aus einem an der Druckseite der Verdichterschaufel vorgesehenen ersten Deckblech 5 und einem an der Saugseite der Verdichterschaufel vorgesehenen zweiten Deckblech 4. An der zum Schaufelkern 1 weisenden Innenseite der Deckbleche 4 und 5 ist jeweils ein Metallgewebe 6 befestigt, über das eine innige, feste Verbindung zwischen den Deckblechen 4, 5 und dem Faserverbundmaterial des Schaufelkerns 1 hergestellt wird. Alternativ kann diese innige Verbindung zwischen den Deckblechen und dem Faserverbundmaterial auch durch nach dem Stand der Technik bekannten Weisen vorbehandelt werden wie zum Beispiel Anätzen oder Aufrauen der Bleche. Die Deckbleche 4, 5 sind in der Lage, einen Teil der Schlagkräfte und der Erosionsbelastung, die durch Vogelschlag oder auftreffende Sand- oder Hagelkörner auftreten, aufzunehmen. Da die Schlag- und Erosionswirkungen im Bereich der Führungskante (Lufteintrittskante) der Schaufel jedoch besonders groß sind, könnte eine herkömmlich hergestellte Schaufel durch Vogelschlag zerstört werden oder durch in diesem sensiblen Bereich allmählich fortschreitende Erosion, Korrosion und Rissbildung beschädigt werden und dabei auch den Schaufelkern 1 in Mitleidenschaft ziehen. Um das zu verhindern sind die beiden Deckbleche 4 und 5 an der Führungskante der Schaufel über ein Führungskanten-Formstück 3 miteinander verbunden.

Das Führungskanten-Formstück 3 besteht aus massivem Metall, beispielsweise aus austenitischem Stahl, und weist an der den Kanten der Deckbleche 4, 5 zugewandten Seite jeweils eine der Länge und Stärke des betreffenden Deckbleches entsprechende Ausnehmung 7 auf. In der Ausnehmung 7 ist die Vorderkante des jeweiligen Deckbleches 4, 5 mit dem Führungskanten-Formstück 3 durch Schweißen, zum Beispiel Laser- oder Diffusionsschweißen, verbunden, und zwar so, dass die Außenfläche des Führungskanten-Formstückes 3 bündig mit der Außenfläche des jeweiligen Deckblechs abschließt und somit der Übergang zwischen Deckblech und Führungskanten-Formstück nicht kerbempfindlich ist.

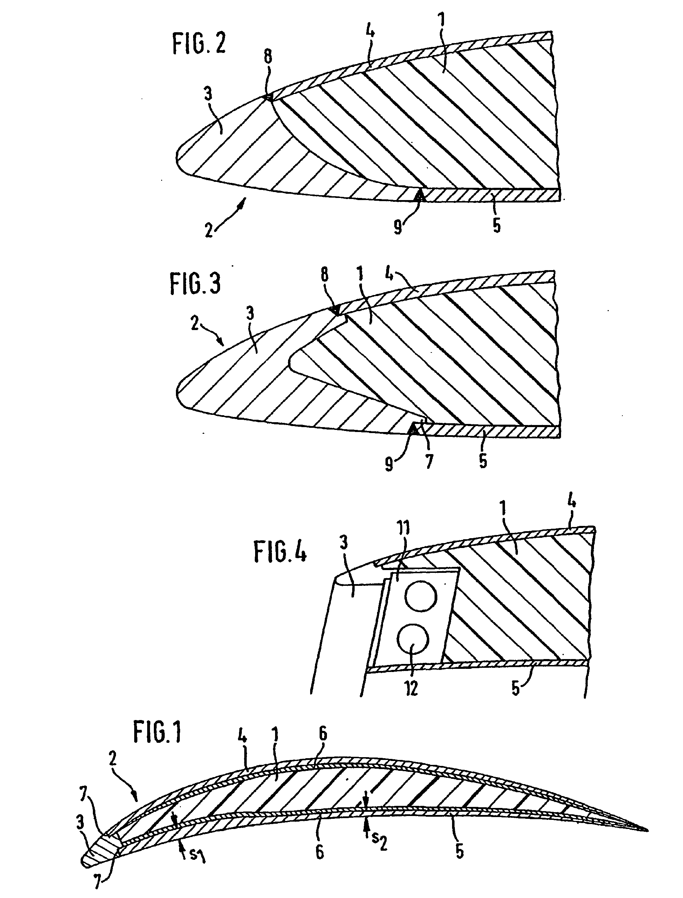

Gemäß der Zeichnung, wie insbesondere aus Fig. 2 erkennbar, ist das Führungskanten-Formstück 3 so ausgebildet, dass die beiden Schweißnähte 8 und 9, über die die Deckbleche 4, 5 mit dem Führungskanten-Formstück 3 verbunden sind, versetzt zueinander angeordnet sind. Dadurch kann die Schweißnahtprüfung ohne gegenseitige Fehlerbeeinflussung erfolgen. Von großer Bedeutung ist jedoch die richtige Anordnung der Anschlussstellen (Ausnehmungen 7) am Führungskanten-Formstück 3, und zwar so, dass die auf der höher belasteten Druckseite (Deckblech 5) liegende Anschlussstelle für die Schweißnaht 9 weiter von der Führungskante (Spitze des Führungskanten-Formstücks 3) weg angeordnet ist. Dadurch wird diese Verbindungsstelle zwischen Führungskanten-Formstück 3 und Deckblech 5 (Druckseite) nicht zu stark beansprucht.

Gemäß der in Fig. 3 gezeigten Ausführungsform ist in die zum Schaufelkern 1 (Faserverbundmaterial) weisende Fläche des Führungskanten-Formstücks 3 eine Auskehlung (Vertiefung) 10 eingeformt, um eine große Kontaktfläche und damit eine möglichst gute Verbindung mit dem Faserverbundmaterial zu schaffen und zudem die Masse des Führungskanten-Formstücks 3, gerade wenn dieses sehr lang oder dick ausgebildet ist, zu reduzieren. Es versteht sich, dass die Dimensionierung des Führungskanten-Formstücks 3 variabel ist und, zum Beispiel mit einem sehr kleinen Radius an der Spitze, so gestaltet werden kann, dass optimale aerodynamische Eigenschaften erzielt werden.

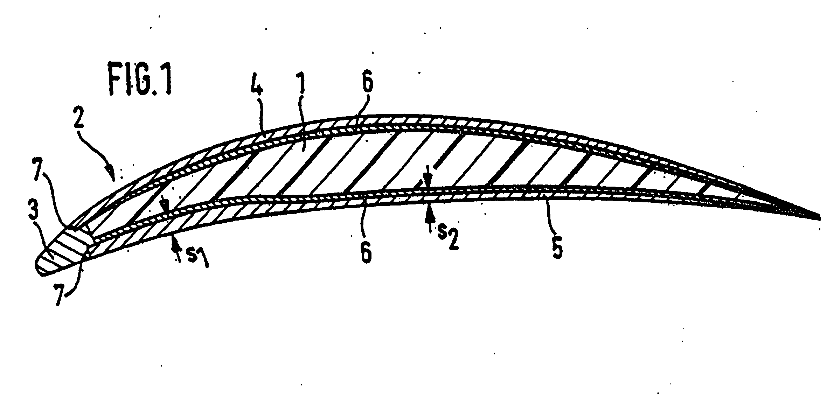

In Fig. 4 ist eine weitere Ausführungsform des Führungskanten-Formstücks 3 wiedergegeben, an dessen zum Schaufelkern weisender Seite ein in das Faserverbundmaterial ragender Befestigungssteg 11 angeformt ist, der zum Schaufelkern 1 hin auch keilförmig erweitert sein kann, um eine innige Verbindung zwischen Schaufelkern 1 und Führungskanten-Formstück 3 zu schaffen. Aus Fig. 4 ist insbesondere zu erkennen, dass der Befestigungssteg 11 mit Befestigungslöchern 12 versehen ist, über die das Fasermaterial mit dem Befestigungssteg 11 verbunden ist. Der Befestigungssteg 11 kann auch andere Profilierungen, Strukturierungen oder Verankerungselemente zur Herstellung einer festen Verbindung zwischen Führungskanten-Formstück 3 und Schaufelkern 1 aufweisen.

Wie oben erwähnt ist die Beanspruchung der Verdichterschaufel auf der Druckseite größer als auf der Saugseite und in der Nähe der Führungskante wiederum größer als in einem von dieser weiter entfernten Bereich. Die mehrteilige metallische Umhüllung 2, bestehend aus dem Führungskanten-Formstück und den beiden Deckblechen, schafft die Möglichkeit, die verschiedenen Bestandteile der Umhüllung aus unterschiedlichen, auf die jeweilige Belastung abgestimmten Werkstoffen herzustellen oder die Deckbleche jeweils in unterschiedlicher Blechstärke auszubilden. Diese Bauweise ermöglicht, die Deckbleche und das Führungskanten-Formstück aus jeweils den Anforderungen angepassten, unterschiedlichen Werkstoffen herzustellen. In besonderer Weise sind Nickelbasiswerkstoffe, austenitische Stähle und Titanbasiswerkstoffe geeignet. Aufgrund der hohen Belastung in dem führungskantennahen Bereich auf der Druckseite ist das Deckblech 5, wie Fig. 1 zeigt, in variablen Wandstärken s1, s2,..., sog. "maßgeschneiderte Bleche" (taylored blanks) ausgeführt. Der Bereich mit der größeren Wandstärke s1 schließt dann direkt an das Führungskanten-Formstück 3 an.

Wie erwähnt, ist auch die Länge des Führungskanten-Formstücks 3 in Abhängigkeit von der zu erwartenden Belastung variabel. Auch das Profil des Führungskanten-Formstücks kann, wie Fig. 3 zeigt, so geformt sein, dass auf der Druckseite mehr Material als auf der Saugseite vorhanden ist.

Die in den zuvor erläuterten Ausführungsbeispielen beschriebene Verdichterschaufel mit einer aus den Einzelelementen 3, 4 und 5 aufgebauten metallischen Umhüllung 2 kann entsprechend den jeweiligen Belastungsbedingungen hinsichtlich Materialstärke, Materialart und Formgebung der Führungskante so ausgebildet werden, dass bei maximal notwendigem Gewicht eine hohe Stabilität und eine lange Lebensdauer sowie optimale aerodynamische Eigenschaften gewährleistet sind. Eine am ehesten in dem am höchsten belasteten Führungskantenbereich auftretende Rissbildung oder Materialschwächung oder -schädigung durch Erosion oder Korrosion kann durch Austauschen des Führungskanten-Formstücks 3 oder durch Materialauftrag kostengünstig repariert werden.

## Patentansprüche

1. Verdichterschaufel für ein Flugzeugtriebwerk, deren Schaufelblatt einen Schaufelkern (1) aus einem Faserverbundwerkstoff und eine mehrteilige metallische Umhüllung (2), bestehend aus einem Führungskanten-Formstück (3) und mit diesem stirnseitig verschweißten, auf der Saug- und der Druckseite angeordneten Deckblechen (4, 5), umfasst, wobei das aus massiven Metall bestehende Führungskanten-Formstück (3) zum Schaufelkern (1) hin eine Auskehlung (10) aufweist, in die der Fäserverbundwerkstoff hineinragt, im Querschnitt asymmetrisch geformt ist und auf der Druckseite länger als auf der Saugseite ausgebildet ist, wobei die druckseitige Schweißnaht (9) weiter von der Führungskante entfernt ist als die saugseitige Schweißnaht (8) und das Führungskantenformstück (3) auf der Druckseite eine größere Materialstärke als auf der Saugseite hat.

2. Verdichterschaufel nach Anspruch 1, **dadurch gekennzeichnet, dass** die Wandstärke der beiden Deckbleche (4, 5) oder ein und desselben Deckblechs von der Führungskante zur hinteren Kante hin belastungsabhängig unterschiedlich ist.

3. Verdichterschaufel nach Anspruch 2, **dadurch gekennzeichnet, dass** das Deckblech (5) auf der Druckseite eine größere Materialstärke als das Deckblech (4) auf der Saugseite aufweist.

4. Verdichterschaufel nach Anspruch 3, **dadurch gekennzeichnet, dass** das druckseitige Deckblech (5) in dem an das Führungskanten-Formstück (3) anschließenden vorderen Bereich eine größere Wandstärke als in dem hinteren Bereich aufweist.

5. Verdichterschaufel nach Anspruch 1, **dadurch gekennzeichnet, dass** an das Führungskanten-Formstück (3) ein in den Faserverbundwerkstoff ragender Befestigungssteg (11) angeformt ist, der zur innigen Verbindung mit dem Faserverbundwerkstoff zum Schaufelkern (1) hin keilförmig erweitert ist und/oder Oberflächenstrukturen oder Befestigungslöcher (12) aufweist.

6. Verdichterschaufel nach Anspruch 1, **dadurch gekennzeichnet, dass** das Führungskanten-Formstück (3) Ausnehmungen (7) zur Aufnahme der Enden der Deckbleche (4, 5) aufweist.

7. Verdichterschaufel nach Anspruch 1, **dadurch gekennzeichnet, dass** die einzelnen Bauteile (3 bis 5) der Umhüllung (2) aus der jeweiligen Belastung entsprechenden unterschiedlichen Metallen oder Metalllegierungen bestehen.

8. Verdichterschaufel nach Anspruch 1, **dadurch gekennzeichnet, dass** als Werkstoff für die Deckbleche (4, 5) und für das Führungskanten-Formstück (3) Nickelbasiswerkstoffe, austenitische Stähle oder Titanbasiswerkstoffe eingesetzt werden.

9. Verdichterschaufel nach Anspruch 1, **dadurch gekennzeichnet, dass** die metallische Umhüllung an der zum Schaufelkern gewandten Seite ein Metallgewebe (6) umfasst.

## Claims

1. Compressor blade for an aircraft engine whose airfoil consists of a blade core (1) made of a fiber compound material and a multi-part metallic enclosing structure (2), consisting of a leading-edge former (3) and blanks (4, 5) arranged on the suction and pressure sides, with the end faces of the blanks (4, 5) welded to the leading-edge former, with the leading-edge former (3) made of solid metal featuring a fillet (10) facing the blade core (1), into which the fiber compound material protrudes and having an asymmetrical cross-section and being longer on the pressure side than on the suction side, with the pressure-side weld (9) being farther away from the leading edge than the suction-side weld (8), and with the leading-edge former (3) having a greater material thickness on the pressure side than on the suction side.

2. Compressor blade in accordance with Claim 1, **characterized in that** the wall thickness of the two blanks (4, 5) or the thickness of one and the same blank varies from the leading edge to the trailing edge in dependence of the load applied.

3. Compressor blade in accordance with Claim 2, **characterized in that** the blank (5) on the pressure-side is thicker than the blank (4) on the suction side.

4. Compressor blade in accordance with Claim 3, **characterized in that** the pressure-side blank (5) is thicker in the front area adjacent to the leading-edge former (3) than in the rear area.

5. Compressor blade in accordance with Claim 1, **characterized in that** an attaching rib (11) is formed onto the leading-edge former (3) which protrudes into the fiber compound material and is enlarged in the form of a wedge towards the blade core (1) for ensuring an intimate tie with the fiber compound material and/or features surface textures or attaching holes (12).

6. Compressor blade in accordance with Claim 1, **characterized in that** the leading-edge former (3) features recesses (7) for locating the ends of the blanks (4, 5).

7. Compressor blade in accordance with Claim 1, **characterized in that** the individual components (3 to 5) of the enclosing structure (2) are made of different metals or metal alloys in accordance with the respective load conditions.

8. Compressor blade in accordance with Claim 1, **characterized in that** nickel-base materials, austenitic steels and titanium-base materials are used for the blanks (4, 5) and for the leading-edge former (3).

9. Compressor blade in accordance with Claim 1, **characterized in that** the metallic enclosing structure comprises a metal weave (6) on the side facing the blade core.

## Revendications

1. Aube de compresseur pour un moteur d'avion, dont la pale comprend une âme (1) en matériau composite renforcé par des fibres et une enveloppe métallique en plusieurs parties (2), composée d'une pièce façonnée de bord d'attaque (3) et de tôles de recouvrement (4, 5) soudées en bout à celle-ci et disposées sur les côtés refoulement et aspiration, sachant que la pièce façonnée de bord d'attaque (3) en métal massif présente en direction de l'âme d'aube (1) une cannelure (10) dans laquelle pénètre le matériau renforcé par des fibres, a une forme asymétrique en coupe transversale et est plus longue du côté refoulement que du côté aspiration, sachant que la soudure (9) se trouvant sur le côté refoulement est plus éloignée du bord d'attaque que la soudure (8) se trouvant sur le côté aspiration, et que la pièce façonnée de bord d'attaque (3) présente une épaisseur de matériau plus importante du côté refoulement que du côté aspiration.

2. Aube de compresseur selon la revendication nº 1, **caractérisée en ce que** l'épaisseur des deux tôles de recouvrement (4, 5) ou d'une seule et même tôle de recouvrement varie entre le bord d'attaque et le bord de fuite en fonction de la contrainte.

3. Aube de compresseur selon la revendication nº 2, **caractérisée en ce que** la tôle de recouvrement (5) du côté refoulement présente une épaisseur de matériau plus importante que la tôle de recouvrement (4) du côté aspiration.

4. Aube de compresseur selon la revendication n° 3, **caractérisée en ce que** la tôle de recouvrement (5) du côté refoulement présente, dans la zone avant en liaison avec la pièce façonnée de bord d'attaque (3), une épaisseur plus importante que dans la zone arrière.

5. Aube de compresseur selon la revendication nº 1, **caractérisée en ce qu'**une barrette de fixation (11) pénétrant dans le matériau composite renforcé par des fibres est formée sur la pièce façonnée de bord d'attaque (3), et élargie de façon cunéiforme en direction de l'âme d'aube (1) pour une liaison étroite avec le matériau composite renforcé par des fibres et/ou présente des structures de surface ou des orifices de fixation (12).

6. Aube de compresseur selon la revendication n° 1, **caractérisée en ce que** la pièce façonnée de bord d'attaque (3) présente des évidements (7) destinés à loger les extrémités des tôles de recouvrement (4, 5).

7. Aube de compresseur selon la revendication nº 1, **caractérisée en ce que** les différentes parties (3 à 5) de l'enveloppe (2) sont composées de différents métaux ou alliages métalliques en fonction de la contrainte respective.

8. Aube de compresseur selon la revendication nº 1, **caractérisée en ce que** des matériaux à base de nickel, des aciers austénitiques ou des matériaux à base de titane sont utilisés pour la fabrication des tôles de recouvrement (4, 5) et de la pièce façonnée de bord d'attaque (3).

9. Aube de compresseur selon la revendication nº 1, **caractérisée en ce que** l'enveloppe métallique présente une toile métallique (6) sur la face tournée vers l'âme d'aube.
